# EUROPEAN PATENT APPLICATION

(11) **EP 1 865 701 A1**
(43) Date of publication of application: **12.12.2007**
(21) Application number: 05727343.5
(22) Date of filing: 30.03.2005
(51) Int. Cl.: H04M 17/00, H04M 1/57, H04M 15/00

(54) **COMMUNICATION DEVICE, COMMUNICATION PROGRAM, AND COMMUNICATION METHOD**

(71) Applicant: FUJITSU LIMITED, Kawasaki-shi, Kanagawa 211-8588 (JP)
(72) Inventor: MIYAUCHI, W. Fujitsu Mobile Communic. Techn. Ltd., Sapporo-shi, Hokkaido 0600807 (JP); SAWAE, K. Fujitsu Mobile Communication Techn. Ltd., Sapporo-shi, Hokkaido 0600807 (JP); MATSUYA, S. Fujitsu Mobile Communication Techn Ltd, Sapporo-shi, Hokkaido 0600807 (JP); WATANABE, H. Fujitsu Mobile Communication Tech Ltd, Sapporo-shi, Hokkaido 0600807 (JP); TOMIKAWA, T. Fujitsu Mobile Communication Tech Ltd, Sapporo-shi, Hokkaido 0600807 (JP); KIMURA, Y., Fujitsu Mobile Communication Tech. Ltd, Sapporo-shi, Hokkaido 0600807 (JP); KIKUCHI, Y., Fujitsu Mobile Communication Tech Ltd, Sapporo-shi, Hokkaido 0600807 (JP); SHIBAYAMA, A Fujitsu Mobile Communication Tech Ltd, Sapporo-shi, Hokkaido 0600807 (JP); ISHIKAWA, T Fujitsu Mobile Communication Tech Ltd., Sapporo-shi, Hokkaido 0600807 (JP)
(74) Representative: Fenlon, Christine Lesley
(86) International application number: PCT/JP2005/006095
(87) International publication number: WO 2006/103764

(57) **Abstract**

A communication apparatus for calling a counterpart apparatus and communicating with the counterpart apparatus, includes: a request issuing section for issuing a communication request to the counterpart apparatus; a response receiving section for receiving a communication permission response, which is sent from the counterpart apparatus, to the communication request issued from the request issuing section; an informing section for issuing information indicating that the communication apparatus uses a predetermined call rate paying system to the counterpart apparatus; and a communication permitting section for permitting a communication between a user of the communication apparatus and a user of the counterpart apparatus via the communication apparatus and the counterpart apparatus after the information is issued from the informing section.

## Description

### Technical Field

The present invention relates to a communication apparatus that calls a counterpart apparatus based on a calling number uniquely allocated to the apparatus and communicates with the called counterpart apparatus, a communication program that is executed in an apparatus having a function of executing a program and causes the apparatus to operate as the communication apparatus, and a communication method for calling a counterpart apparatus based on a calling number uniquely allocated to an apparatus and communicating with the called counterpart apparatus.

### Background Art

Fraud cases abusing a cellular phone in a prepaid system (hereinafter referred to as a prepaid system phone) have occurred frequently and have become one of social problems. For the prepaid system phone, it is necessary to buy a prepaid card or the like in which a call rate is collected in advance. However, identification of a person who buys the prepaid card is not required or much less simpler than in the case of a usual cellular phone for which a call rate is collected later. Therefore, in frauds abusing a prepaid system phone, it is hard to identify the right person who bought the prepaid card because the received phone number in the frauds are usually registered with fictitious names.

For solving the above-described problem, selling of prepaid cards has now come to require the same identification as that performed in selling a cellular phone in a post-paid system. Patent Document 1 describes an automatic vending machine for selling prepaid system phones that automatically performs identification on a buyer as a technique for reducing complexity of tasks due to increased identification procedures at a cellular phone dealer. The technique described in Patent Document 1 can identify a buyer of a prepaid system phone without growing working load on a cellular phone dealer.
Patent Document 1: Japanese Patent Laid-Open No. 2002-183811

### Disclosure of the invention

### Problem to be Solved by the Invention

The prepaid system phone, however, is easily resold as a buyer is not asked a bank account or a street address when the buyer pays a call rate. Although the technique described in Patent Document 1 can identify a buyer, a fraud is conducted after a prepaid system phone may be resold. In such a case, it is hard to identify who conducted the fraud.

Under such circumstances, some people think that the service of the prepaid system phone should be abolished. On the other hand, as a mailing function or a Web function is provided for a cellular phone, a call rate of the cellular phone has risen. More and more parents of young users have been demanding a prepaid system phone that disables calling when a call rate exceeds a prepaid amount of money. Thus, it is required to develop a system for enabling a receiver to watch a call from a prepaid system phone instead or identifying a user of the prepaid system phone.

The present invention is adapted in view of the circumstances and provides a communication apparatus, a communication program and a communication method for enabling a receiver of a call from a prepaid system phone to check that the other party uses a prepaid system phone.

### Solution for Solving the Problem

A communication apparatus of the present invention is a communication apparatus that calls a counterpart apparatus and communicates with the counterpart apparatus, including:
a request issuing section that issues a communication request to the counterpart apparatus;
a response receiving section that receives a communication permission response to the communication request issued from the request issuing section, the communication permission response being sent from the counterpart apparatus;
an informing section for issuing information indicating that the communication apparatus uses a predetermined call rate paying system to the counterpart apparatus; and
a communication permitting section for permitting a communication between a user of the communication apparatus and a user of the counterpart apparatus via the communication apparatus and the counterpart apparatus after the information is issued from the informing section.

According to the communication apparatus of the present invention, when a communication permission response sent from the counterpart apparatus is received, the counterpart apparatus is informed that the communication apparatus uses a predetermined call rate paying system, and then, a call with the counterpart apparatus is permitted. With a communication apparatus of the present invention applied to a prepaid system cellular phone that causes a problem by being abused, a user of the counterpart apparatus can recognize as a precaution that the call is from a prepaid system cellular phone prior to answer the call.

Preferably, the communication apparatus of the present invention is a communication apparatus for making a phone call to the counterpart apparatus, wherein:
the informing section transmits an audio message to the counterpart apparatus; and
the communication permitting section permits a call with the counterpart apparatus upon completion of transmission of the audio message to the counterpart apparatus.

As the audio message is informed, a user of the counterpart apparatus can correctly check that the call is from the communication apparatus that uses a predetermined call rate paying system even if the counterpart apparatus is a phone without a display.

Preferably, in the communication apparatus of the present invention, the predetermined call rate paying system is a prepaid system and the informing section informs that the communication apparatus uses a prepaid system.

Fraud cases or the like that abuse a communication apparatus in a prepaid system have become controversial. Such fraud cases can be reduced as information indicating that the call is from a communication apparatus that uses the prepaid system is given before the call is answered.

Further, a communication program of the present invention that is executed in a communication apparatus having a function of executing the program and thereby causes the communication apparatus to call and communicate with a counterpart apparatus, the communication apparatus including:
a request issuing section that issues a communication request to the counterpart apparatus;
a response receiving section that receives a communication permission response to the communication request issued from the request issuing section, the communication permission response being sent from the counterpart apparatus;
an informing section that issues information indicating that the communication apparatus uses a predetermined call rate paying system to the counterpart apparatus; and
a communication permitting section that permits a communication between a user of the communication apparatus and a user of the counterpart apparatus via the communication apparatus and the counterpart apparatus after the information is issued from the informing section.

The communication program of the present invention can cause the communication apparatus to function as a communication apparatus for informing the counterpart apparatus that the call is from the communication apparatus that uses a predetermined call rate paying system.

Note that elements to be implemented by executing the communication program of the present invention, such as a request issuing section, may be such that a single element is implemented by a single program element, a single element is implemented by two or more program elements, or two or more elements are implemented by a single program element. These elements may execute their functions by themselves, or may instruct other programs or other program elements that are included in the communication apparatus to execute functions.

Preferably, the communication program of the present invention is executed in the communication apparatus to cause the communication apparatus to make a phone call with the counterpart apparatus,
the informing section transmits an audio message to the counterpart apparatus, and
the communication permitting section permits a call with the counterpart apparatus upon completion of transmission of the audio message to the counterpart apparatus.

With the audio message informed, the counterpart apparatus can correctly check that the call is from the communication apparatus that uses a predetermined call rate paying system.

Further preferably, in the communication program of the present invention, the predetermined call rate paying system is a prepaid system, and the informing section informs that the communication apparatus uses a prepaid system.

The above feature makes it possible to inform to the counterpart apparatus before the call is answered that the call is from a communication apparatus that uses a prepaid system, which is likely to be abused and causes a problem.

A communication method of the present invention in a communication apparatus that calls and communicates with the counterpart apparatus, includes the steps of:
issuing a communication request to the counterpart apparatus;
receiving a communication permission response to the communication request issued at the step of issuing the communication request, the communication permission response being sent from the counterpart apparatus;
issuing information indicating that the communication apparatus uses a predetermined call rate paying system to the counterpart apparatus; and
permitting a communication between a user of the communication apparatus and a user of the counterpart apparatus via the communication apparatus and the counterpart apparatus after the information is issued at the step of issuing the information.

According to the communication method of the present invention, it is possible to inform the counterpart apparatus that the call is from the communication apparatus that uses a predetermined call rate paying system.

Although only a basic embodiment of the communication method of the present invention is shown here, that is merely for avoiding redundant description, and the communication method disclosed by the present invention includes various embodiments corresponding to the communication apparatuses other than the basic embodiment.

The present invention provides a communication apparatus, a communication program and a communication method that enable a receiver of a call from a prepaid system phone to check that the prepaid system phone is used for the call.

### Brief Description of the Drawings

Fig. 1 is a schematic diagram showing an example of a communication system to which an embodiment of the present invention is applied.
Fig. 2 is an external perspective view of a prepaid system cellular phone.
Fig. 3 is a block diagram showing a hardware configuration of a prepaid system cellular phone.
Fig. 4 is a diagram showing a communication program as an embodiment of the present invention that is executed by a CPU.
Fig. 5 is a flowchart showing a flow of calling up a cellular phone or a fixed-line phone shown in Fig. 1 from a prepaid system cellular phone.
Fig. 6 is a flowchart showing a flow of the processing performed in a prepaid system cellular phone.
Fig. 7 is a diagram representing a flow of the processing shown in Figs. 5 and 6.

### Best Mode for Carrying Out the Invention

An embodiment of the present invention will be described with reference to the drawings.

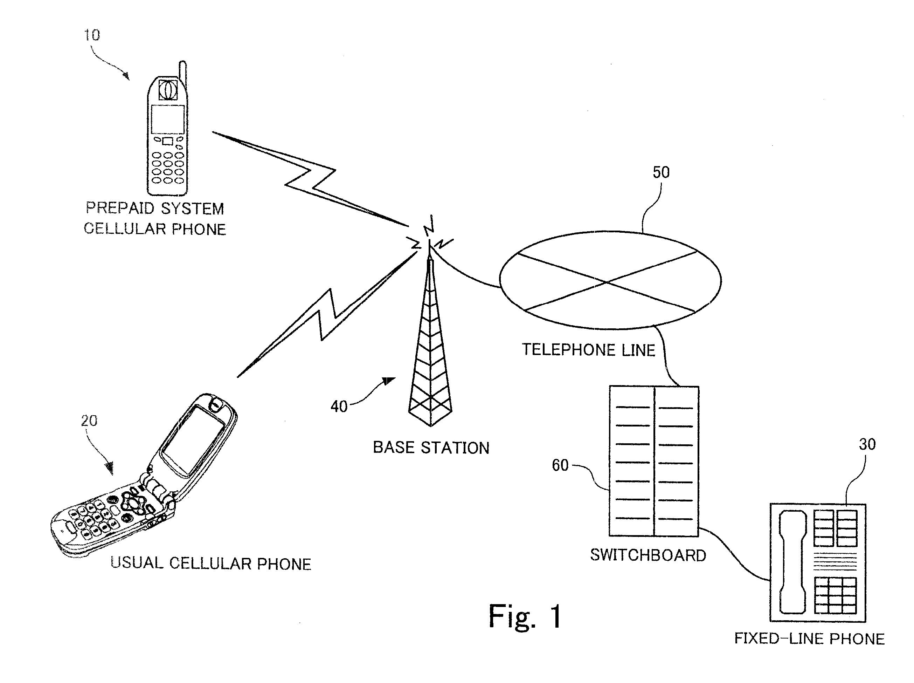

Fig. 1 is a schematic diagram showing an example of a communication system to which an embodiment of the present invention is applied.

In Fig. 1, a prepaid system cellular phone 10 that uses a prepaid system in which a call rate is paid in advance by a purchase of a prepaid card, a cellular phone 20, a base station 40 that performs wireless communication between the prepaid system cellular phone 10 and the cellular phone 20, a fixed-line phone 30, a telephone switchboard 60 for transferring a call or various types of information to the fixed-line phone 30, and a telephone line network 50 for connecting the telephone switchboard 30, the base station 40 and the like are shown. Actually, a great number of cellular phones and fixed-line phones are connected with the base station 40 or the telephone switchboard 60, and a great number of base stations and a great number of telephone switchboards are connected with the telephone line network 50, but in Fig. 1, these only necessary to describe the present invention are shown for simplicity. The cellular phone 20 may be a prepaid system cellular phone for which a call rate is paid in advance or a usual cellular phone for which a call rate is collected afterwards.

More and more crimes using a prepaid system cellular phone have been conducted. The prepaid system cellular phone 10 of the embodiment has a function of informing the counterpart phone that "it is a call from a prepaid system cellular phone." when the cellular phone calls up the counterpart phone. The informing function will be described later.

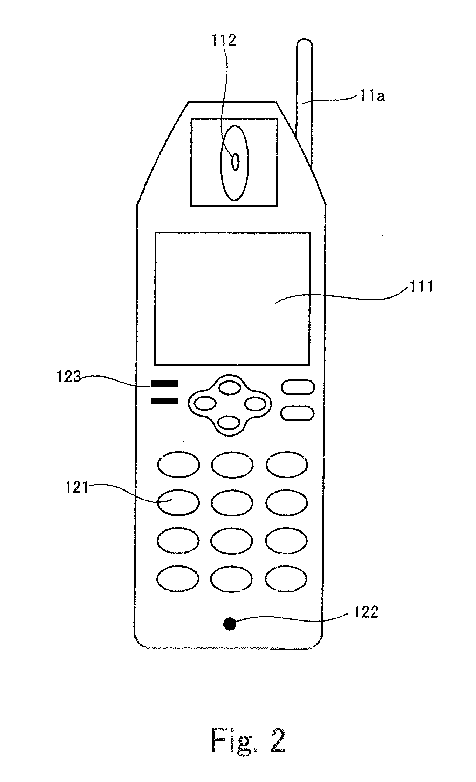

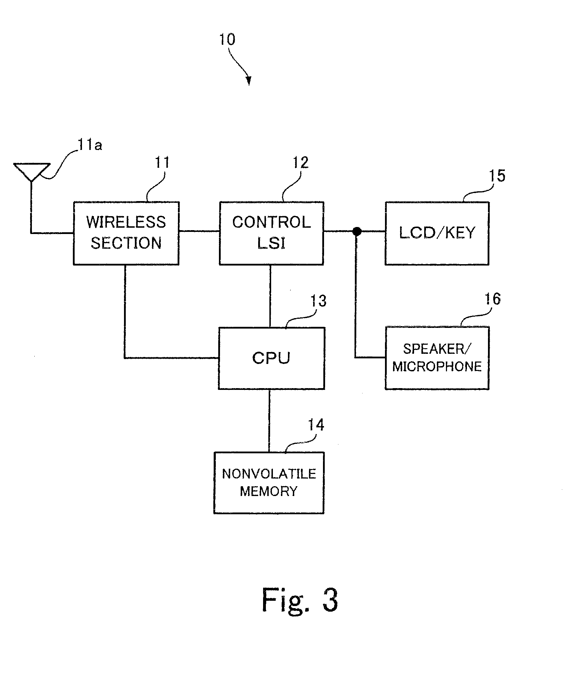

Fig. 2 is an external perspective view of a prepaid system cellular phone. Fig. 3 is a hardware configuration diagram of the prepaid system cellular phone.

The prepaid system cellular phone 10 is provided with a LCD 111 for displaying a telephone number or an image, an earpiece 112 with a small speaker inside to be placed onto an ear for listening to voices, various operational keys 121 that enables a user to perform operations such as making a phone call by using the prepaid system cellular phone 10, sending an electric mail message, and performing various settings, a mouthpiece 122 with a microphone incorporated for picking up voice of a user and guiding the voice to the microphone, and a voice releasing piece 123 with a big speaker inside for releasing sound so big as to be listened to by a user without placing to the ear.

Fig. 3 shows a block diagram including a wireless section 11, a control LSI 12, a CPU 13, a nonvolatile memory 14, an LCD/key 15, and a speaker/microphone 16.

The wireless section 11 performs wireless communication with outside via an antenna 11a also shown in Fig. 2. The control LSI 12 serves to transfer or process a signal between the wireless section 11 and the LCD/key 15, between the wireless section 11 and the speaker/microphone 16 under a control of the CPU 13, and between the CPU 13 and the LCD/key 15, the speaker/microphone 16.

The CPU 13 executes a program for controlling the wireless section 11 and the control LSI 112 or obtains information from the LCD/key 15 via the control LSI.

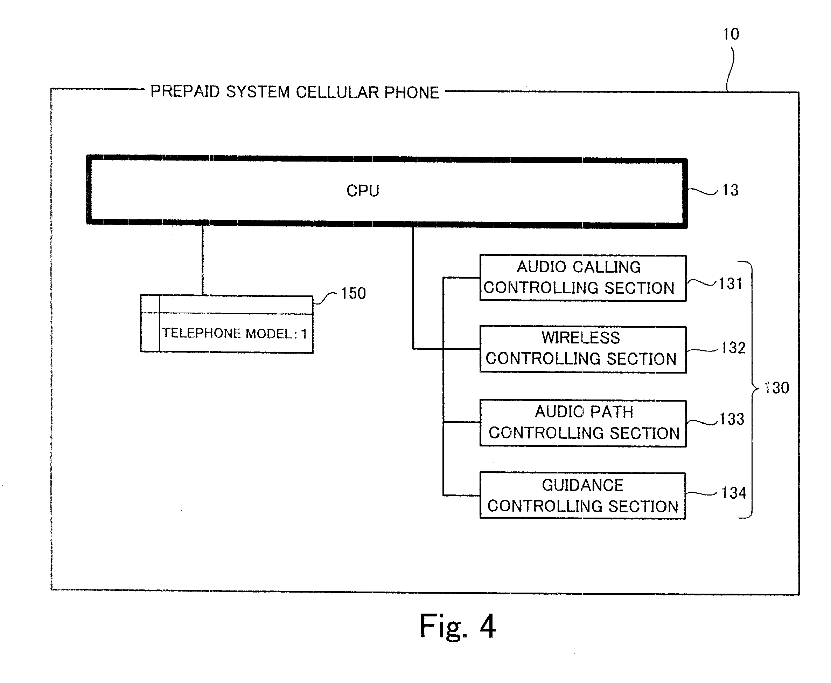

The nonvolatile memory 14 stores a program to be executed in the CPU 13 or a telephone model (to be described later) that is described with reference to Fig. 4, and the like.

The LCD/key 15 corresponds to the LCD111 and the various keys 121 in the appearance shown in Fig. 2, serving to display an image and detect a key operation by a user.

The speaker/microphone 16 is used when a telephone function of the prepaid system cellular phone 10 is mainly used, serving to send a call to a user or receive a user's voice.

Fig. 4 is a diagram showing a communication program as an embodiment of the present invention that is executed by the CPU 13 shown in Fig. 3.

The communication program 130 executed by the CPU 13 includes an audio calling controlling section 131, a wireless controlling section 132, an audio path controlling section 133, and a guidance controlling section 134.

Although the audio calling controlling section 131, the wireless controlling section 132, the audio path controlling section 133, and the guidance controlling section 134 are shown as program elements consisting the communication program 130 in Fig. 4, functions that are implemented by executing the program elements in the CPU 13 are also denoted by the same name as the program elements. The program elements and their functions will be described without making distinction therebetween.

Each of various functions to be implemented by each program element shown in Fig. 4 will be described below.

When the communication program 130 is executed in the CPU 13, a telephone model 150 is referenced. When the prepaid system cellular phone 10 is used as a prepaid system cellular phone, 1 is allocated to the telephone model 150, and when the prepaid system cellular phone 10 is used as a usual cellular phone for which a call rate is collected afterwards, 0 is allocated to the telephone model 150, which is stored in the nonvolatile memory 14 shown in Fig. 3. Only when the telephone model 150 is 1, operations of the various elements to be described below are executed in the cellular phone 10 so that the informing function specific to the embodiment is implemented. By the telephone model 150 being recorded, a manufacturer of cellular phones can easily set the cellular phone in the same model to either the prepaid system cellular phone or the usual cellular phone.

The audio calling controlling section 131 is for controlling various elements shown in Fig. 4. The audio calling controlling section 131 corresponds to an example of the communication permitting section described in the present invention.

The role of the wireless controlling section 132 is served by the wireless section 11 shown in Fig. 3. It issues a communication request to a counterpart phone according to an instruction from the audio calling controlling section 131 and receives a communication permission response from the counterpart phone. The wireless controlling section 132 corresponds to each example of a request issuing section and a response receiving section described in the present invention.

The guidance controlling section 140 informs the audio path controlling section 133 of an audio guidance of "the call is issued from a prepaid system cellular phone." that is recorded in the nonvolatile memory in advance according to an instruction from the audio calling controlling section 131. The audio path controlling section 133 opens an audio path to the counterpart phone and transfers the audio guidance informed from the guidance controlling section 140 to the counterpart phone. Combination of the guidance controlling section 140 and the audio path controlling section 133 corresponds to an example of the informing section described in the present invention.

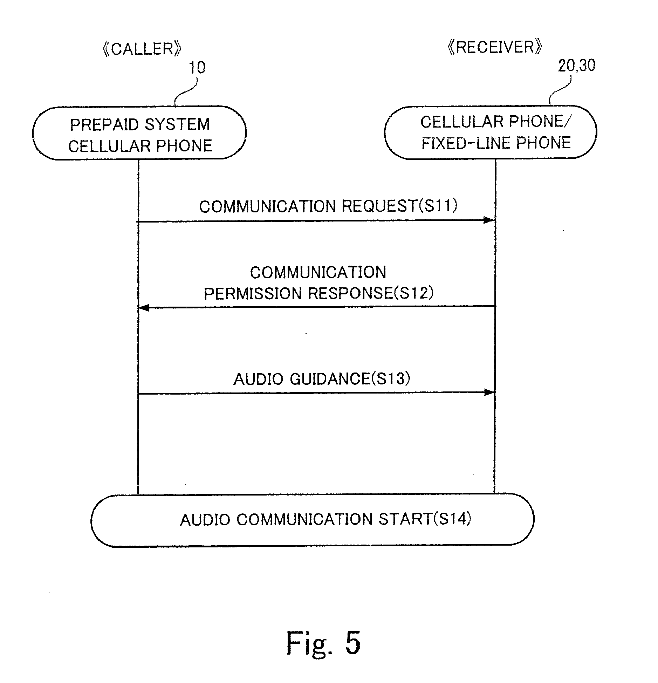

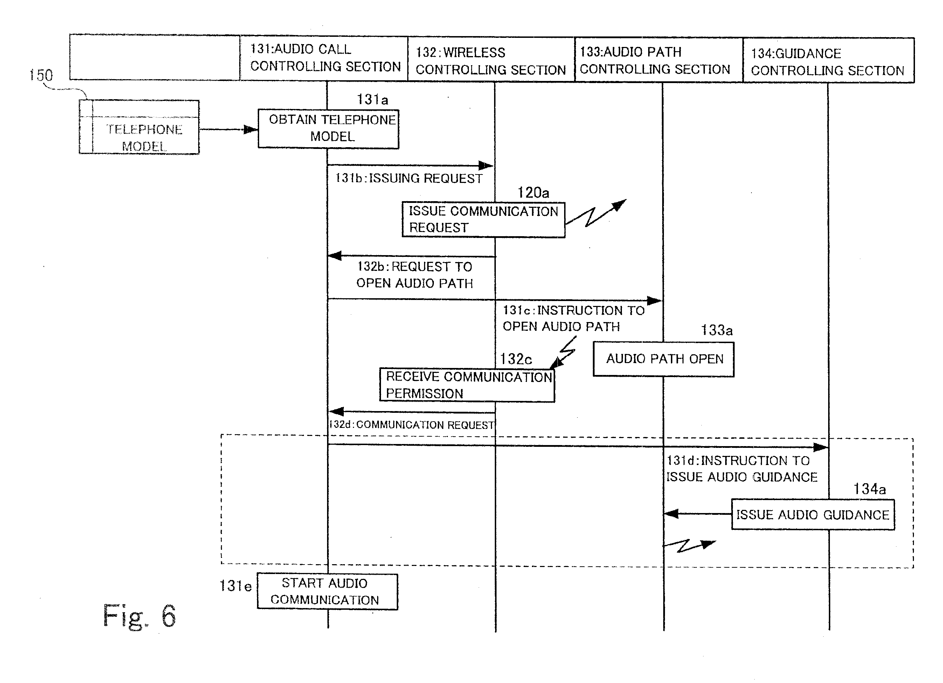

Fig. 5 is a flowchart showing a flow of calling up the cellular phone 20 or the fixed-line phone 30 shown in Fig. 1 from the prepaid system cellular phone 10. Fig. 6 is a flowchart showing a flow of the processing performed in the prepaid system cellular phone 10.

Here, reference numerals given to individual processes in Fig. 6, for example 131a, 131b, ... , 132a ..., show that they are the processes by the program elements shown in Fig. 4 corresponding to the respective reference numerals with alphabet being removed from the reference numerals in Fig. 6, for example 131; 132; ... are given. That is to say, by an example, the reference numerals 131a, 131b, ... are the processes by the audio calling controlling section 131, which is a program element constituting the communication program 130 shown in Fig. 4. That is the same for the other program elements.

When a user of the prepaid system cellular phone 10 designates a telephone number of the cellular phone 20 or the fixed-line phone 30 (counterpart phone) shown in Fig. 1 and makes a phone call to the counterpart phone, the communication request is sent from the prepaid system cellular phone 10 to the counterpart phone as shown in Fig. 5 (step S11 in Fig. 5).

Here, inside the prepaid system cellular phone 10, the telephone model 150 recorded in the nonvolatile memory 14 is obtained by the audio calling controlling section 131 as shown in Fig. 6 (step S131a in Fig. 6). If the telephone model 150 is 0 (a usual cellular phone), usual communication processing is executed. Here, the telephone model 150 is 1 (a prepaid system cellular phone), thus, the informing processing specific to the embodiment is executed in addition to the usual communication processing. The audio calling controlling section 131 instructs the wireless controlling section 132 to issue the communication request (step S131b in Fig. 6).

The wireless controlling section 132 receives the instruction from the audio calling controlling section 131 and issues the communication request from the antenna 11a in Fig. 3 to the counterpart phone (step S132a in Fig. 6). The process at step S132a where the communication request is issued corresponds to an example of the the present invention. After issuing the communication request, the wireless controlling section 132 requests the audio calling controlling section 131 to open an audio path (step S132b in Fig. 6).

When the audio calling controlling section 131 receives the request for an audio path from the wireless controlling section 132, it instructs the audio path controlling section 133 to open the audio path (step S131c in Fig. 6).

The audio path controlling section 133 opens the audio path to the counterpart phone (step S133a in Fig. 6) .

Returning to Fig. 5, the user of the counterpart phone recognizes the incoming call by an incoming sound of the cellular phone 20 or the fixed-line phone 30. If a phone call is made from the prepaid system cellular phone 10 in an "invisible mode", the user of the counterpart phone cannot check the telephone number of the calling phone. If a phone call is made from the prepaid system cellular phone 10 in a "visible mode", the telephone number of the calling phone is displayed on a display or the like provided on the phone, however, the user cannot check whether the call is from a prepaid system cellular phone or a telephone in a usual system for collecting a call rate afterwards from the displayed telephone number. The user of the counterpart phone answers the call without determining the type of the calling telephone (step S12 in Fig. 5).

Meanwhile, inside the prepaid system cellular phone 10, the communication permission response sent from the counterpart phone is received, by the wireless controlling section 132 as shown in Fig. 6 (step S132c in Fig. 6). The process at step 3132c for receiving the communication permission response corresponds to an example of the response receiving step in the communication method of the present invention. The wireless controlling section 132 transfers the call request to the audio calling controlling section 131 (step S132d in Fig. 6).

When the audio calling controlling section 131 receives the calling request, it does not permit the calling immediately and instructs the guidance controlling section 134 to issue an audio guidance (step S131d in Fig. 6) .

The guidance controlling section 134 obtains the audio guidance recorded in the nonvolatile memory 14 according to the instruction from the audio calling controlling section 131 and transfers the audio guidance to the audio path controlling section 133 (step S134a in Fig. 6). The audio guidance transferred to the audio path controlling section 133 is sent to the counterpart phone via the audio path. The process at step S134a for sending the audio guidance corresponds to an example of the informing process in the communication method of the present invention.

Returning to Fig. 5, the user of the counterpart phone answers the call at step S12, but the call is not permitted by the prepaid system cellular phone 10 and the call is in a disabled state. When the user answers the call, an audio guidance of "the call is from the prepaid system cellular phone." is transferred from the prepaid system cellular phone 10. The user of the counterpart phone listens to the audio guidance, determines whether or not to permit the call. If the user does not permit the call, the user disconnects the call. If the user permits the call, the user keeps connection until the audio guidance ends.

During the period between reception of the communication permission response from the counterpart phone and the end of transmission of the audio guidance (the part marked by a dashed line), communication between the prepaid system cellular phone 10 and the counterpart phone cannot be performed as shown in Fig. 6. After confirming that the audio guidance has been sent to the counterpart phone, the audio calling controlling section 131 permits the call (step S131e in Fig. 6). The process at step S131e for permitting the call corresponds to an example of the communication permitting process in the communication method of the present invention.

At this moment, the call starts (step S14 in Fig. 5).

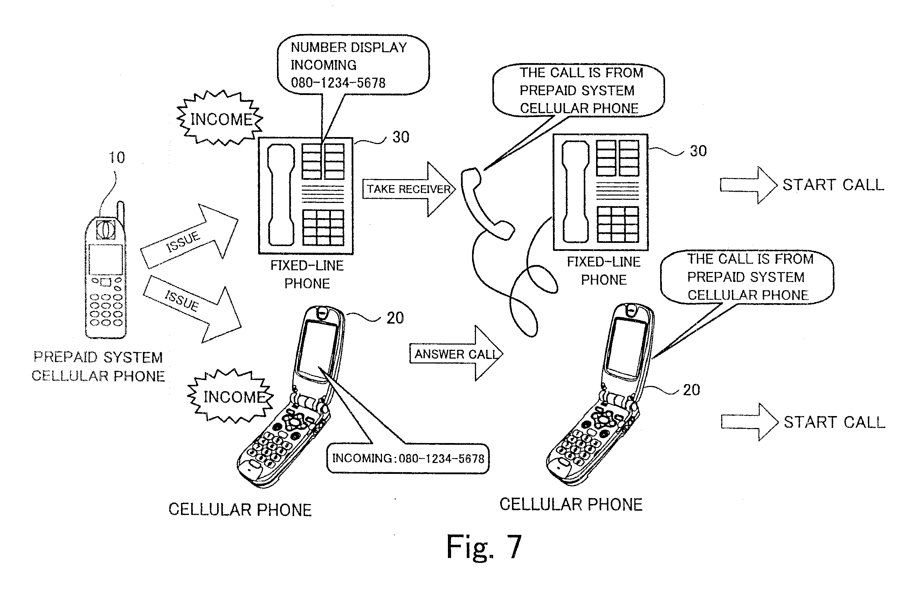

Fig. 7 is a diagram representing a flow of the processing shown in Figs. 5 and 6.

When the communication request is issued from the prepaid system cellular phone 10, the telephone number of the prepaid system cellular phone 10 is displayed on the display of the fixed-line phone 30 or the cellular phone 20. At this moment, whether the displayed telephone number is a telephone number of a prepaid system cellular phone or not cannot be determined.

When a user answers the call with the fixed-line phone 30 or the cellular phone 20, the audio guidance is transferred from the prepaid system cellular phone 10 with the audio of "the call is output from the prepaid system cellular phone." being output from the speaker of the fixed-line phone 30 or the cellular phone 20. The user of the fixed-line phone 30 or the cellular phone 20 recognizes that the call is from a prepaid system cellular phone by the audio. If the user does not permit the call, the user disconnects the call. If the user permits the call, the user listens to the audio guidance until it ends and keeps connection until the prepaid system cellular phone 10 permits the call.

As the audio guidance informs that the call is from the prepaid system cellular phone in the above-described manner, even a phone without a display can surely receive the information. As the call is permitted after the audio guidance ends at the fixed-line phone 30 and the cellular phone 20, the fact that the call is from the prepaid system cellular phone 10 can be informed certainly. That avoids crime using a prepaid system cellular phone 10.

Although an example where audio guidance indicating that the communication apparatus uses a predetermined call rate paying system is issued is described above, the informing section described in the present invention may display a message on a display of the counterpart phone instead of issuing audio guidance.

Although an example where the present invention is applied to a cellular phone using wireless communication is described above, the communication apparatus of the present invention may be applied to a fixed-line phone that uses a telephone line for calling or an Internet phone that calls using the Internet line.

## Claims

1. A communication apparatus that calls a counterpart apparatus and communicates with the counterpart apparatus, comprising:
a request issuing section that issues a communication request to the counterpart apparatus;
a response receiving section that receives a communication permission response to the communication request issued from the request issuing section, the communication permission response being sent from the counterpart apparatus;
an informing section that issues information indicating that the communication apparatus uses a predetermined call rate paying system to the counterpart apparatus; and
a communication permitting section that permits a communication between a user of the communication apparatus and a user of the counterpart apparatus via the communication apparatus and the counterpart apparatus after the information is issued from the informing section.

2. The communication apparatus according to claim 1, wherein:
the communication apparatus is a communication apparatus that makes a phone call to the counterpart apparatus,
the informing section transmits an audio message to the counterpart apparatus; and
the communication permitting section permits a call with the counterpart apparatus upon completion of transmission of the audio message to the counterpart apparatus.

3. The communication apparatus according to claim 1, wherein the predetermined call rate paying system is a prepaid system and the informing section informs that the communication apparatus uses a prepaid system.

4. A communication program that is executed in a communication apparatus having a function of executing the program and thereby causes the communication apparatus to call and communicate with a counterpart apparatus, the communication apparatus comprising:
a request issuing section that issues a communication request to the counterpart apparatus;
a response receiving section that receives a communication permission response to the communication request issued from the request issuing section, the communication permission response being sent from the counterpart apparatus;
an informing section that issues information indicating that the communication apparatus uses a predetermined call rate paying system to the counterpart apparatus; and
a communication permitting section that permits a communication between a user of the communication apparatus and a user of the counterpart apparatus via the communication apparatus and the counterpart apparatus after the information is issued from the informing section.

5. The communication program according to claim 4, wherein:
the communication program is executed in the communication apparatus to cause the communication apparatus to make a phone call with the counterpart apparatus,
the informing section transmits an audio message to the counterpart apparatus; and
the communication permitting section permits a call with the counterpart apparatus upon completion of transmission of the audio message to the counterpart apparatus.

6. The communication program according to claim 4, wherein the predetermined call rate paying system is a prepaid system, and the informing section informs that the communication apparatus uses a prepaid system.

7. A communication method in a communication apparatus that communicates with a counterpart apparatus, the method for calling and communicating with the counterpart apparatus comprising the steps of:
issuing a communication request to the counterpart apparatus;
receiving a communication permission response to the communication request issued at the step of issuing the communication request, the communication permission response being sent from the counterpart apparatus;
issuing information indicating that the communication apparatus uses a predetermined call rate paying system to the counterpart apparatus; and
permitting a communication between a user of the communication apparatus and a user of the counterpart apparatus via the communication apparatus and the counterpart apparatus after the information is issued at the step of issuing the information.
